# EUROPÄISCHE PATENTSCHRIFT

(11) **EP 2 836 357 B1**
(45) Veröffentlichungstag und Bekanntmachung des Hinweises auf die Patenterteilung: **01.11.2017**
(21) Anmeldenummer: 13715680.8
(22) Anmeldetag: 10.04.2013
(51) Int. Cl.: B29C 70/64, B29C 71/04, B65G 15/32, B65G 17/06, B65G 17/08, B29C 59/16, B65G 17/40, B29C 35/08

(54) **KETTENFÖRDERER FÜR KUNSTSTOFFBEHÄLTNISSE**
CHAIN CONVEYOR FOR PLASTIC CONTAINERS
CHAÎNE CONVOYEUSE POUR CONTENEURS EN PLASTIQUE

(30) Priorität: 10.04.2012 DE 102012103078
(43) Veröffentlichungstag der Anmeldung: 18.02.2015
(73) Patentinhaber: Krones AG, 93073 Neutraubling (DE)
(72) Erfinder: HÜTTNER, Johann, 93073 Neutraubling (DE); SEGER, Martin, 93073 Neutraubling (DE)
(74) Vertreter: Bittner, Bernhard
(86) Internationale Anmeldenummer: PCT/EP2013/057466
(87) Internationale Veröffentlichungsnummer: WO 2013/153100

(56) Entgegenhaltungen:
- EP-A1- 1 705 198
- WO-A1-96/41759
- DE-A1- 10 026 298
- US-A1- 2010 292 374
- US-B1- 6 485 794
- US-B2- 8 057 903

## Beschreibung

Die vorliegende Erfindung bezieht sich auf eine Vorrichtung zum Transportieren von Behältnissen und insbesondere von Kunststoffbehältnissen. Derartige Vorrichtungen sind aus dem Stand der Technik seit langem bekannt. So ist es beispielsweise bekannt, dass Behältnisse, wie beispielsweise Kunststoffflaschen, auf Kunststoffbändern oder auch Kunststoffketten transportiert werden. Derartige Kunststoffketten werden üblicherweise aus Polyamid (PA) oder Polyoxymethylen (POM) gefertigt. Zur Verringerung der Reibung wird üblicherweise auf die Oberfläche der Kette oder des Transportbandes ein Schmiermittel aufgebracht.

Da jedoch in jüngerer Zeit vermehrt Transporteuranlagen im Trockenlauf gefordert werden, gibt es verstärkt Probleme mit erhöhtem Reibwert zwischen den Behältnissen und den Kunststoffscharnierbandketten bzw. Mattenketten. Versuche ohne Bandschmiermittel und anderen Materialien, wie zum Beispiel Metall, PA und POM scheiterten unter anderem am Reibwert der Materialien zu den PET-Behältnissen. Insbesondere in jüngerer Zeit werden zur Gewichtseinsparung immer leichtere Kunststoffvorformlinge eingesetzt und andererseits wird auch immer mehr recyceltes Material für die Herstellung von Kunststoffbehältnissen verwendet. Diese Materialauswahl führt jedoch auch dazu, dass die Kunststoffbehältnisse vermehrt auch zum Verkleben neigen.

Dabei kann es sowohl zu einem Verkleben der Kunststoffbehältnisse untereinander kommen als auch zu einem Ankleben der Kunststoffbehältnisse an dem Transportband bzw. der Transportkette.

Aus der EP 0 987 200 A2 ist eine Transportkette bekannt, welche eine Vielzahl von Verbindungselementen aufweist, die durch Bolzen miteinander verbunden sind. Dabei sind diese Verbindungselemente aus einem synthetischen Harzmaterial gefertigt.

Die EP 1 705 198 A1 beschreibt ebenfalls eine Transportkette mit einer Vielzahl von Verbindungsstücken, wobei diese Verbindungsstücke mit einer Platte verbunden sind und diese Platte ein synthetisches Harzmaterial und wenigstens ein antistatisches Element mit einem hohen Molekulargewicht aufweist. WO96/41759 A1 beschreibt eine Transportkette mit Noppen.

DE 100 26 298 A1 beschreibt eine Transportkette mit Rollkörpern. Im Stand der Technik ist üblicherweise der Einsatz zusätzlicher Verbrauchsmaterialien nötig, die außerdem in Verbindung mit Wasser zwecks Reinigung wieder abgewaschen werden müssen oder bei einer Nassschmierung die Abwasserentsorgung kontinuierlich belasten. Der vorliegenden Erfindung liegt daher die Aufgabe zugrunde, eine Transporteinrichtung zur Verfügung zu stellen, welche eine geringere Reibung mit den zu transportierenden Behältnissen aufweist. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Transportieren von Behältnissen weist ein umlaufendes Transportmittel nach Anspruch 1 auf. Es werden also hier zwei Möglichkeiten vorgeschlagen, um derartige Transporteinrichtungen zur verbessern. Bei einer nicht erfinderische Alternative werden die Transport- bzw. Kettenglieder (bei ihrer Herstellung) Strahlen, und insbesondere Gamma- oder Beta-Strahlen ausgesetzt. Durch diese Behandlung werden die Molekülketten der Transportglieder homogen auch im Inneren des Materials vernetzt. Auf diese Weise kann die Reibung reduziert werden. Gleichzeitig wird auch die Temperaturbeständigkeit erhöht und somit kann der sich einstellende Verschleiß weitgehend vermieden werden. Trotz Bestrahlung kann eine gute Gleiteigenschaft der Profile bzw. Transportglieder erhalten bleiben.

Bevorzugt wurden die Transportglieder bzw. der Kunststoff der Transportglieder mit Strahlen bestrahlt, welche eine (Quanten-) energie von mehr als 100 keV, bevorzugt von mehr als 150keV aufweisen. Dabei ist es möglich, dass zunächst ein Kunststoffmaterial bestrahlt wird und anschließend aus diesem bestrahlten Kunststoffmaterial die einzelnen Transportglieder erzeugt werden. Es wäre jedoch auch möglich, dass zunächst die Transportglieder erzeugt werden und diese anschließend (zumindest abschnittsweise) bestrahlt werden. Vorteilhaft handelt es sich bei den Transportgliedern um im Wesentlichen starr bzw. unflexibel ausgebildete Transportglieder.

Vorteilhaft ist der Kunststoff von der Strahlung durchstrahlt. Besonders bevorzugt handelt es sich bei dem Kunststoff um ein homogenes Material, welches bevorzugt außen wie innen gleich aufgebaut ist.

Vorteilhaft transportiert die Transporteinrichtung die Behältnisse wenigstens einer Behandlungseinrichtung zum Behandeln der Behältnisse (beispielsweise einer Fülleinrichtung zum Befüllen der Behältnisse, einer Etikettiereinrichtung oder einem Verschließer) zu oder von wenigstens einer Behandlungseinrichtung zum Behandeln der Behältnisse ab.

Bei dem Behandeln der Kunststoffvorformlinge kann es sich um eine Behandlung handeln, welche aus einer Gruppe von Behandlungen ausgewählt ist, welche ein Blasformen von Kunststoffvorformlingen zu Behältnissen, ein Erwärmen von Kunststoffbehältnissen, ein Kühlen von Kunststoffbehältnissen, ein Sterilisieren von Kunststoffbehältnissen, ein Reinigen von Kunststoffbehältnissen, ein Befüllen von Kunststoffbehältnissen, ein Verschließen von Kunststoffbehältnissen, ein Etikettieren von Kunststoffbehältnissen und/oder ein Transportieren von Kunststoffbehältnissen oder dergleichen enthält.

Die Anmelderin hat herausgefunden, dass derartig strahlenbehandelte Kunststoffe, insbesondere strahlenvernetzte Kunststoffe, eine wesentlich verbesserte Eigenschaft, insbesondere hinsichtlich der Reibeigenschaften haben. Ein derartiges Bestrahlen von Kunststoffmaterialien ist bereits seit längerem bekannt. Ursprünglich war nach einem geeigneten Isolationsmaterial für Kabel gesucht worden. Dabei wurde herausgefunden, dass eine Bestrahlung bestimmter Kunststoffe durch Strahlung eine Vernetzung des Kunststoffes induziert und daneben auch eine Degradation von Polymeren. Unter einer Vernetzung wurde ursprünglich eine Reaktion verstanden, bei der eine Vielzahl einzelner Makromoleküle zu einem dreidimensionalen Netz verknüpft wird. Dabei verändern sich die Eigenschaften des Materials. Ziel ist es, dabei beispielsweise Polymerwerkstoffen eine größere Härte oder auch Temperaturbeständigkeit zu verleihen.

Bei einer weiteren vorteilhaften Ausführungsform ist das Kunststoffmaterial aus einer Gruppe ausgewählt, welche Polyethylen (PE), Polyether/Etherketonen (PEEK), Polyoxymethylen (POM), und insbesondere Ulta-High-Molecular-Weight-Polyethylen (UHMW-PE), PP (Polypropylen), PA (Polyamid) - insbesondere PA46, PA6, PA6.6, PA11 oder PA12 - , PBT (Polybutyletherphthalat, PMP (Polymethylpenten) und dergleichen enthält. Daneben können auch Kombinationen aus diesen Materialien eingesetzt werden. Die genannten Kunststoffe sind dabei z.T. Beispiele für strahlenvernetzbare Kunststoffe.

Bei einer weiteren vorteilhaften Ausführungsform ist dem Kunststoff eine weitere Komponente zugesetzt, um die Vernetzung zu fördern. Verteilhaft ist diese weitere Komponente in einem Resin zugesetzt. Vorteilhaft handelt es sich bei dieser weiteren Komponente um einen Vernetzungsverstärker. Bevorzugt können dabei die Kunststoffmaterialien PA oder PBT vernetzt werden.

Zum Nachweis der Vernetzung kann der Vernetzungsgrad (auch genannt Gelanteil) verwendet werden. Die Ermittlung dieses Gelanteils erfolgt in Anlehnung an die DIN 16892/120 durch Kochen über mehrere Stunden in einem geeigneten Lösungsmittel (z. Bsp. Ameisensäure). Es wird dabei gravimetrisch bestimmt, wie hoch die Masse des vernetzten Materials im Verhältnis zur Gesamtmasse ist. Ebenso ist für praktische Schnelltests ein Lötkolbentest nach Vorgabe PTS üblich. Vorteilhaft liegt der Gelanteil bzw. der Vernetzungsgrad über 10%, bevorzugt über 30%, und besonders bevorzugt über 50%.

Vorteilhaft ist dem Kunststoff, insbesondere dem strahlenvernetzten Kunststoff wenigstens eine weitere Komponente und insbesondere ein weiteres Material zugesetzt. Vorteilhaft bewirkt die Zusetzung dieses weiteren Materials eine Verbesserung der Gleiteigenschaften der Führungseinrichtung. Bei einer weiteren vorteilhaften Ausführungsform handelt es sich bei der weiteren Komponente um eine kohlenstoffbasierte Komponente und insbesondere um Graphit. Es könnten jedoch auch andere Komponente wie Öle oder Paraffine zugesetzt sein.

Die hier beschriebenen Kunststoffe zeichnen sich auch durch eine verbesserte Reibfestigkeit und Zugbelastung aus. Diese Eigenschaften können noch weiter verbessert werden, wenn dem Kunststoff Glasfasern oder Carbonfasern zugegeben werden.

Daneben ist es auch denkbar, dass der Kunststoff mehrkomponentig und insbesondere zeikomponentig aufgebaut ist. So ist es möglich, dass der Kunststoff einen vernetzten Kern aufweist und als weitere Gleitpartner für die Behältnisse bzw. Gleitleisten könnte, beispielsweise unter einer Kette ein weiterer Kunststoff umspritzt werden. Weiterhin wäre es auch möglich, unterschiedliche Materialien etwa für die Oberseite und die Unterseite des Kunststoffkörpers vorzusehen.

Im Rahmen der Herstellung wäre es dabei möglich, zunächst mit einer 2- Komponenten Spritzgussmaschine die Kettenglieder herzustellen und diese anschließend zu vernetzen. Bei einer geeigneten Wahl der Kunststoffe könnte beispielsweise der Kern vernetzbar sein und die Oberflächen könnten im Gegensatz hierzu nicht vernetzt sein oder sogar inert sein oder auch noch zusätzlich ihre tribologischen Eigenschaften verbessern.

Unter Kunststoffbehältnissen werden neben den eigentlichen Grundkörpern wie etwa Flaschen auch deren Zubehörteile wie insbesondere deren Verschlüsse verstanden. Die Erfindung ist daher ebenfalls auf eine Transporteinrichtung zum Transportieren von Behältnisverschlüssen anwendbar wie etwa Rinnen oder Transportketten für Behältnisverschlüsse, in oder auf denen die Verschlüsse transportiert werden können oder auch Transportscheiben für Behältnisverschlüsse. Auch ist die Erfindung auf Gebinde aus mehreren Behältnissen anwendbar oder auch auf Vorrichtungen, welche etwa Getränkekisten transportieren. Allgemein ist daher die Erfindung auf Transporteinrichtungen zum Transportieren von Stückgut anwendbar.

Vorteilhaft wird bei der Strahlenbehandlung eine genau ermittelte Energiemenge in den Kunststoff eingebracht, wobei beispielsweise Elektronenbeschleuniger unterschiedlicher Leistung (für Beta-Strahlen) oder auch eine Kobalt-60 Quelle (für Gamma-Strahlen) eingesetzt werden kann.

Die Anmelderin hat festgestellt, dass auch diese Einwirkung ionisierender Strahlung für die Behandlung mit Lebensmitteln unbedenklich ist, da durch ionisierende Strahlung in Kunststoffen selbst keine Radioaktivität erzeugt wird.

Bei den Kunststoffbehältnissen handelt es sich insbesondere um PET-Behältnisse. Bevorzugt handelt es sich bei der Strahlenbehandlung der Kunststoffe insbesondere um ein Vernetzen dieser Kunststoffe durch Gamma- und/oder Beta-Strahlen. Vorteilhaft weist daher zumindest die den Behältnissen zugewandte Führungsfläche der Transportglieder einen durch Strahlung behandelten Kunststoff auf. Bei einer weiteren vorteilhaften Ausführungsform sind die Transportglieder aus wenigstens zwei Komponenten aufgebaut.

Ein wesentlicher Unterschied zwischen diesen beiden Strahlungsarten besteht in der Durchdringungsfähigkeit und der Dosisleistung. In Anlagen mit Elektronenbeschleunigern wird mit hohen Dosisleistungen gearbeitet, aber mit einer von der Energie abhängigen beschränkten Eindringtiefe. Durch die mittlerweile verfügbaren Beschleunigeranlagen mit hoher Elektronenenergie können auch größere Bauteile mit Elektronen "durchstrahlt" werden.

Gamma-Strahlen hingegen weisen eine hohe Durchdringungsfähigkeit bei einer relativ geringen Dosisleistung auf. Anwendungstechnisch bedeutet dies, dass in den Elektronenbeschleunigern die Dosis innerhalb von Sekunden auf das Strahlgut aufgebracht wird, während dafür in einer Gamma-Anlage mehrere Stunden benötigt werden.

Insbesondere bei kompakt aufgebauten Formteilen, wie etwa den Transportgliedern können wiederum Gamma-Strahlen einen größeren Vorteil aufweisen. Vorteilhaft werden bei Bestrahlung des Materials Elektronenstrahlen eingesetzt.

Bei einer vorteilhaften Ausführungsform weist zumindest die den Behältnissen zugewandte Oberfläche der Transportglieder einen durch Einwirkung von Gamma- und/oder Beta-Strahlung behandelten Kunststoff auf. Dies bedeutet, dass nicht notwendigerweise das gesamte Transportglied bestrahlt sein muss, jedenfalls jedoch im Wesentlichen diejenige Oberfläche, welche später mit dem Kunststoffbehältnis in Berührung kommt.

Bevorzugt weist die oben erwähnte, den Behältnissen zugewandte Führungsfläche ein durch die besagte Strahlung vernetztes Material auf.

Bei der Durchdringung eines Polymers werden im Falle von Elektronenbestrahlung diese Elektronen abgebremst und geben über eine Kaskade an Sekundärelektronen Bewegungsenergie an das Material ab. Daraufhin brechen die Makromoleküle statistisch in Radikale auf, die die Vernetzung mit weiteren Makromolekülen bewirken. So können sich beispielsweise Kunststoffpolyethylen (PE), Polyoxymethylen (POM) oder Polyamid (PA) unmittelbar in Stoffe mit verbesserter Wärmeformbeständigkeit bei höheren Gebrauchstemperaturen verwandeln. Daneben konnte jedoch auch festgestellt werden, dass die Abriebsfestigkeit sich erhöht, was insbesondere im Rahmen der vorliegenden Aufgabenstellung bedeutsam ist. Im Rahmen des Herstellungsprozesses ist es möglich, die so bestrahlten Kunststoffteile unmittelbar nach deren Bestrahlung weiterzuverarbeiten.

Vorzugsweise kann auch ein bereits durch andere Materialien verstärkter Kunststoff verwendet werden; beispielsweise ein Kunststoff, der bereits mit Glasfasern oder Funktionsadditiven versetzt wurde. Die Strahlenvernetzung ist unabhängig von derartigen Verstärkungsmitteln.

Bei der erst beschriebene Alternative ist in das Material der Führungseinrichtung wenigstens abschnittsweise eine Vielzahl von zusätzlichen Körpern, insbesondere von im Wesentlichen kugelförmigen Körpern wie insbesondere Mikroglaskugeln, eingearbeitet. Auf diese Weise wird die mechanische Belastbarkeit erhöht und auch der Reibwert stark herabgesetzt. Bei der zweiten Alternative werden die beiden hier beschriebenen Varianten kumulativ bzw. gemeinsam eingesetzt. Die Oberflächenstruktur des Materials wird durch eine Vielzahl von kugelförmigen Elementen gebildet oder weist eine solche auf, die in einem Grundmaterial und/oder Trägermaterial der Führungseinrichtung oder eines Führungseinsatzes eingebettet sind. Vorteilhaft sind dabei diese Elemente, insbesondere kugelförmigen Elemente, aus einem Material hergestellt, welches aus einer Gruppe von Materialien ausgewählt ist, welche Glas- oder Keramikkugeln und dergleichen, vorzugsweise unipolare Füllstoffe, enthält. Dabei weisen diese zusätzlichen Körper, beispielsweise kugelförmigen Körper jeweils Querschnitte, bzw. Volumina auf, die einen Durchmesser kleiner 1 mm, vorzugsweise kleiner 0,1 mm und besonders vorzugsweise kleiner 0,01 mm aufweisen.

Vorteilhaft beträgt ein Gewichtsanteil dieser kugelförmigen Körper gegenüber dem Gesamtmaterial mehr als 5 %, vorzugsweise mehr als 10 % und besonders vorzugsweise mehr als 20 %.

Anstelle von kugelförmigen Körpern können auch im Wesentlichen kugelförmige Körper, beispielsweise ellipsenartige Körper vorgesehen sein.

Vorteilhaft bilden die Transportglieder eine Stützfläche aus, welche einen Bereich der Behältnisse und insbesondere einen Bodenbereich der Behältnisse abstützt. Bei der Vorrichtung handelt es sich damit um eine aktive Förderung, d.h. diese bewegt die Behältnisse aktiv und nicht nur etwa durch ein Entlanggleiten der Behältnisse.

Bei einer weiteren vorteilhaften Ausführungsform sind die Transportglieder wenigstens abschnittsweise aus einem Material hergestellt, welches aus einer Gruppe von Materialien ausgewählt ist, welche Polyethylen (PE), Polyether/ Etherketonen (PEEK), Polyoxymethylen (POM), Polyamid (PA) und insbesondere Ulta-High-Molecular-Weight-Polyethylen (UHMW-PE) enthält. Daneben können auch Kombinationen aus diesen Materialien eingesetzt werden.

Bei einer weiteren vorteilhaften Ausführungsform ist die Vorrichtung eine schmiermittelfrei bzw. im Trockenbetrieb betreibbare Transporteinrichtung. Insbesondere findet also keine Schmierung der Oberfläche der die Behältnisse tragenden Transportglieder statt. Vorteilhaft findet auch keine Schmierung des umlaufenden Transportmittels gegenüber seinem Antrieb statt. Daneben werden auch die Verbindungen zwischen den einzelnen Transportgliedern vorteilhaft nicht geschmiert.

Bei einer weiteren vorteilhaften Ausführungsform fördert die Vorrichtung die Behältnisse zu einer Abfüllanlage zum Befüllen der Behältnisse hin oder von einer Abfüllanlage zum Befüllen der Behältnisse weg. Daneben wäre es auch möglich, dass mehrere derartiger Vorrichtungen vorgesehen sind, welche sowohl Behältnisse zu einer Abfüllanlage fördern als auch (insbesondere befüllte) Behältnisse von einer Abfüllanlage weg befördern.

Bei einer weiteren vorteilhaften Ausführungsform sind die Transportglieder mittels Verbindungskörpern miteinander verbunden und diese Verbindungskörper bestehen aus einem Material, welches aus einer Gruppe von Materialien ausgebildet ist, welche vorteilhaft verschleißfester als die Transportglieder sind. Es handelt sich hierbei vorzugsweise um entweder einen härtbaren rostfreien Stahl oder Polyamidstäbe bei Kunststoffketten. Vorteilhaft sind damit auch diese Verbindungskörper, bei denen es sich beispielsweise um Verbindungsstifte handeln kann, aus einer speziellen Kunststoffzusammensetzung ausgebildet, welche ebenfalls die Reibungsverluste verringert.

Bei einer weiteren vorteilhaften Ausführungsform weist die Vorrichtung wenigstens zwei endseitig angeordnete Umlenkrollen auf, um welche die Transportglieder umgelenkt werden. Vorteilhaft sind dabei auch diese endseitigen Umlenkrollen aus einem Kunststoffmaterial hergestellt. Daneben können auch weitere Rollen wie insbesondere Spannrollen vorgesehen sein.

Bei einer weiteren vorteilhaften Ausführungsform ist das Transportmittel unterhalb der zu fördernden Behältnisse angeordnet. Damit werden vorteilhaft die Behältnisse aufrecht auf dem Transportmittel stehend befördert. Vorteilhaft handelt es sich dabei bei dem Transportmittel um eine Transportkette. Das Transportmittel könnte jedoch auch zu einer seitlichen Förderung der Behältnisse dienen (etwa durch zusammenwirken zweier gegenüberliegender Ketten, zwischen denen die Behältnisse geführt werden) bzw. eine Kontaktfläche zu den Behältnisse könnte sich in vertikaler Richtung erstrecken.

Weiterhin sind bevorzugt Seitenführungselemente vorgesehen, welche ein Herabfallen der Behältnisse von den Transportmitteln verhindern. Dabei ist es vorteilhaft möglich, dass die zu transportierenden Behältnisse einbahnig befördert werden. Es wäre jedoch auch ein zwei- oder mehrbahniger Transport der Behältnisse denkbar.

Bei einer weiteren vorteilhaften Ausführungsform weist das Kunststoffmaterial einen vorgegebenen Gelanteil auf. Vorteilhaft liegt dieser Gelanteil über 10%, bevorzugt über 30%, und besonders bevorzugt über 50%.

Die vorliegende Erfindung ist weiterhin auf ein Transportmittel zum Transportieren von Kunststoffbehältnissen, insbesondere für eine Vorrichtung der oben beschriebenen Art gerichtet. Dabei weist das Transportmittel eine Vielzahl von miteinander verbundenen Transportgliedern auf, wobei das Transportmittel als geschlossene Kette ausgebildet werden kann und diese Transportglieder gelenkig miteinander über Verbindungskörper verbunden sind. Die Transportglieder weisen dabei jeweils ein Kunststoffmaterial auf.

Erfindungsgemäß wurde das Kunststoffmaterial zur Veränderung seiner Materialstruktur mit einer Strahlung beaufschlagt und/oder weist eine Vielzahl von in seine Materialstruktur eingebetteter insbesondere kugelartiger Körper auf. Allgemein können die in das Material eingebetteten Körper auch eine andere räumliche Gestalt aufweisen bzw. granulatartig ausgebildet sein. Bevorzugt weisen jedoch diese (kugelartigen) Körper eine höhere Härte auf als das Kunststoffmaterial in das sie eingearbeitet sind.

Damit wird auch für das Transportmittel vorgeschlagen, dass als Material für die Transportglieder zumindest abschnittsweise ein mit Strahlung beaufschlagtes Material oder ein Material mit eingebetteten (insb. kugelartigen) Körpern vorgesehen wird. Vorteilhaft weisen die kugelartigen Körper eine höhere Härte auf als das Kunststoffmaterial.

Bei einer vorteilhaften Ausführungsform weisen die Transportglieder jeweils einen plattenartigen, als Stützfläche für die Behältnisse dienenden Abschnitt auf. Zumindest dieser Abschnitt und insbesondere die Fläche, welche die Behältnisse kontaktiert, ist dabei in der erfindungsgemäßen Weise behandelt.

Vorteilhaft weisen die Transportglieder wenigstens zwei zueinander in einer zur Transportrichtung senkrecht stehenden Richtung beabstandete Gelenkstellen auf, über welche sie miteinander gelenkig verbunden sind.

Bei einer weiteren vorteilhaften Ausführungsform sind die Transportglieder einteilig ausgebildet. Es wäre jedoch auch möglich, dass die Transportglieder einen Grundkörper aus einem herkömmlichen Material aufweisen, der mit einer Beschichtung aus einem erfindungsgemä-ßen Material versehen ist. So könnte ein Grundkörper der Transportglieder aus einem Karbonmaterial hergestellt sein und auf diesem Grundkörper könnte eine Schicht aus dem erfindungsgemäßen Material angeordnet sein.

Die vorliegende Erfindung ist weiterhin auf die Verwendung eines Kunststoffes, dessen Materialstruktur mittels Strahlen verändert wurde und/oder mittels einer Vielzahl von kugelartigen Körpern versehenen Kunststoffes für eine Transportkette zum Fördern von Kunststoffbehältnissen gerichtet.

Bei den Strahlen handelt es sich insbesondere um Beta- oder Gammastrahlen. Mit diesen Strahlen wurde vorteilhaft zumindest die Oberfläche der Transportglieder beaufschlagt, auf der die Behältnisse stehen.

Weitere Vorteile und Ausführungsformen ergeben sich aus den beigefügten Zeichnungen:

Darin zeigen:
- Fig. 1: Eine schematische Darstellung einer erfindungsgemäßen Vorrichtung zum Transportieren von Behältnissen;
- Fig. 2: eine Darstellung dreier aneinander angeordneter Transportglieder;
- Fig. 3a, 3b: zwei Darstellungen eines Kunststoffmaterials; und
- Fig. 4a, 4b: zwei weitere Darstellungen eines Kunststoffmaterials.

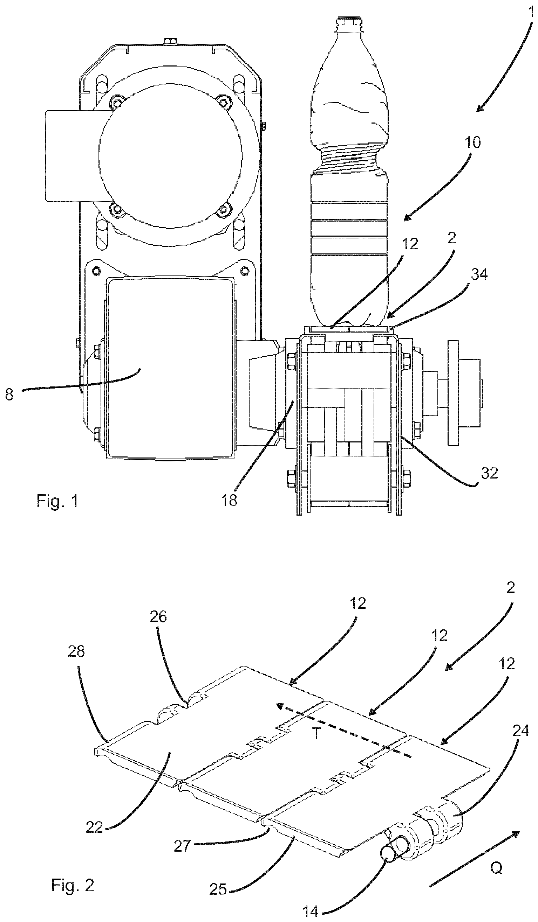

Fig. 1 zeigt eine schematische Darstellung einer erfindungsgemäßen Transporteinrichtung 1 zum Transportieren von Behältnissen 10. Dabei kennzeichnet das Bezugszeichen 2 schematisch ein Transportmittel, welches hier als umlaufende Transportkette ausgebildet ist. Dieses Transportmittel 2 wird dabei seitlich durch eine Führungseinrichtung 34 geführt. Auch diese Führungseinrichtung 34 kann dabei aus dem erfindungsgemäßen Kunststoff hergestellt sein. Das Bezugszeichen 32 kennzeichnet einen Träger, an den das Transportmittel 2 angeordnet ist und das Bezugszeichen 18 kennzeichnet (nur teilweise dargestellt) eine Umlenkrolle zum Umlenken des Transportmittels.

Das Bezugszeichen 8 kennzeichnet einen Antrieb für die Transporteinrichtung, wie insbesondere einen Elektromotor. Das Behältnis 10 wird hier stehend auf dem Transportmittel gefördert. Bei den Behältnissen 10 kann es sich sowohl um befüllte als auch um leere Behältnisse handeln. Das Behältnis ist dabei insbesondere ein PET - Behältnis

Fig. 2 zeigt eine schematische Darstellung dreier Transportglieder 12. Diese Transportglieder 12 sind hier gelenkig miteinander verbunden. Zu diesem Zweck ist an jedem Transportglied ein Anlenkelement 24 angeordnet. Über Verbindungsbolzen 14 sind diese Transportglieder 12 miteinander verbunden. Das Bezugszeichen 26 bezieht sich auf Ausnehmungen, in welche die jeweiligen als Vorsprünge ausgebildeten Anlenkelemente 24 eintreten können. Auf diese Weise wird in einer quer zu der Transportrichtung T verlaufenden Richtung Q an zwei Stellen eine gelenkige Verbindung hergestellt. Vorteilhaft ist der Verbindungsbolzen 14 abnehmbar, damit beispielsweise im Reparaturfall einzelne Transportglieder 12 ausgetauscht werden können.

Das Bezugszeichen 28 bezieht sich auf einen gekrümmten Endabschnitt des einzelnen Verbindungsgliedes, der bewirkt, dass auch bei einem Schwenken eines Verbindungsglieds gegenüber einem anderen keine allzu hohe Lücke zwischen den einzelnen Verbindungsgliedern 12 entsteht.

Das Bezugszeichen 25 kennzeichnet eine Seitenwand der einzelnen Verbindungsglieder und das Bezugszeichen 27 eine Ausnehmung. In diese Ausnehmung kann beispielsweise ein Umlenkrad eingreifen, sodass ein kleinerer Radius an den Endbereichen zur Umlenkung des Transportmittels möglich ist. Unterhalb der Transportmittels 2 kann auch ein Stützelement vorgesehen sein, welches ein starkes Durchbiegen des Transportmittels 2 nach unten verhindert.

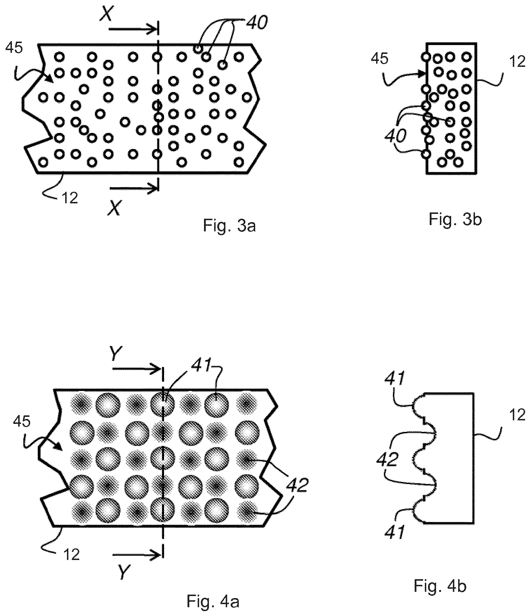

Die Figuren 3a, 3b zeigen eine weitere Ausgestaltung eines erfindungsgemäßen Materials für die Transportglieder 12. Hier ist in den Grundkörper 45 des Materials eine Vielzahl von hier im Wesentlichen kugelförmigen Körpern 40 eingebettet. Fig. 3b zeigt eine Ansicht des Körpers aus Fig. 3a entlang der Pfeile X-X aus Fig. 3a. Man erkennt, dass hier durch diese einzelnen kugelförmigen Körper 40 eine Kontaktfläche ausgebildet ist. Die Erhöhungen, die durch die kugelförmigen Körper 40 verursacht werden, sind hier halbkugelförmig dargestellt, die Erfindung ist jedoch nicht hierauf beschränkt. Insgesamt entsteht jedoch auf diese Weise eine hügelige Führungsfläche und es konnte gezeigt werden, dass diese hügelige Führungsfläche den Reibwert der Transportglieder bzw. deren Oberflächen herabsenkt.

Allgemein ist bevorzugt dieses Einbetten der kugelförmigen Körper 40 auch mit einer Strahlenvernetzung des Kunststoffmaterials kombiniert. Daneben können auch zusätzliche Verstärkungselemente vorgesehen sein, die das Material des Kunststoffes insgesamt verstärken.

Die Figuren 4a, 4b zeigen eine weitere Ausführungsform, bei welcher in dem Material 45 Erhöhungen 41 und/oder Vertiefungen 42 vorgesehen sind. Dabei können diese Erhöhungen und Vertiefungen auch als gleichmäßige Rillen oder Nuten oder mit einer anderen Profilierung vorgesehen sein. Insgesamt wird hierdurch erreicht, dass die resultierende Führungsfläche der Transportglieder 12 eine insgesamt geringere Anlagefläche im Kontaktbereich mit den Kunststoffbehältnissen aufweist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Transporteinrichtung
- 2: Transportmittel
- 8: Antrieb
- 10: Behältnisse
- 12: Transportglieder
- 14: Verbindungsbolzen
- 18: Umlenkrolle
- 24: Anlenkelement
- 25: Seitenwand
- 26: Ausnehmungen
- 27: Ausnehmung
- 28: gekrümmter Endabschnitt
- 32: Träger
- 34: Führungseinrichtung
- 40: kugelförmiger Körper
- 41: Erhöhung
- 42: Vertiefung
- 45: Material für Transportglieder

- T: Transportrichtung
- Q: Querrichtung

## Patentansprüche

1. Vorrichtung (1) zum Transportieren von Behältnissen (10), mit einem umlaufenden Transportmittel (2), welches eine Kontaktfläche für die zu transportierenden Behältnisse ausbildet, wobei sich dieses Transportmittel (2) wenigstens abschnittsweise entlang einer vorgegebenen Richtung bewegt und eine Vielzahl von miteinander gelenkig verbundenen Transportgliedern (12) aufweist und mit einer Antriebseinrichtung (8) zum Antreiben des Transportmittels (2),
**dadurch gekennzeichnet, dass**
die Transportglieder (12) aus einem Kunststoff hergestellt sind, wobei
- der Kunststoff eine Vielzahl von in seine Materialstruktur eingebetteter kugelartiger Körper aufweist, wobei diese einzelnen Kugelkörper (40) eine Kontaktfläche ausbilden, und die einzelnen Kugelkörper (40) einen Durchmesser von kleiner als 1 mm aufweisen, oder
- der Kunststoff zur Veränderung seiner Materialstruktur mit einer Strahlung durchstrahlt wurde und der Kunststoff eine Vielzahl von in seine Materialstruktur eingebetteter kugelartiger Körper aufweist, wobei diese einzelnen Kugelkörper (40) eine Kontaktfläche ausbilden, und die einzelnen Kugelkörper (40) einen Durchmesser von kleiner als 1 mm aufweisen.

2. Vorrichtung (1) nach Anspruch 1,
**dadurch gekennzeichnet, dass**
die Transportglieder (12) aus einem Material hergestellt sind, welches aus einer Gruppe von Materialen ausgewählt ist, welche PA, PEEK, POM, UHMW-PE und dergleichen enthält.

3. Vorrichtung (1) nach Anspruch 1,
**dadurch gekennzeichnet, dass**
die Vorrichtung (1) eine schmiermittelfrei betriebene Vorrichtung (1) ist.

4. Vorrichtung (1) nach wenigstens einem der vorangegangenen Ansprüche,
**dadurch gekennzeichnet, dass**
die Vorrichtung (1) die Behältnisse (10) zu einer Abfüllanlage zum Befüllen der Behältnisse hin oder von einer Abfüllanlage zum Befüllen der Behältnisse (10) weg fördert.

5. Vorrichtung (1) nach wenigstens einem der vorangegangenen Ansprüche,
**dadurch gekennzeichnet, dass**
die kugelartigen Körper (40) aus einem Material hergestellt sind, welches aus einer Gruppe von Materialien ausgewählt ist, welche Glas- oder Keramikkugeln enthält.

6. Vorrichtung (1) nach wenigstens einem der vorangegangenen Ansprüche,
**dadurch gekennzeichnet, dass**
die Transportglieder (12) mittels Verbindungskörpern (14) miteinander verbunden sind und diese Verbindungskörper aus einem Material bestehen, welches aus einer Gruppe von Materialien ausgewählt ist, welche verschleißfester als die Transportglieder sind, vorzugsweise härtbarer rostfreier Stahl oder Polyamidstäbe bei Kunststoffketten.

7. Vorrichtung (1) nach Anspruch 1,
**dadurch gekennzeichnet, dass**
das Kunststoffmaterial einen vorgegebenen Gelanteil aufweist.

8. Vorrichtung nach Anspruch 7,
**dadurch gekennzeichnet, dass**
der Gelanteil über 10%, bevorzugt über 30%, und besonders bevorzugt über 50% liegt.

9. Transportmittel (2) zum Transportieren von Kunststoffbehältnissen (10), insbesondere für eine Vorrichtung nach wenigstens einem der vorangegangenen Ansprüche, wobei das Transportmittel (2) eine Vielzahl von miteinander verbundenden Transportgliedern (12) aufweist, wobei das Transportmittel (2) als geschlossene Kette ausgebildet werden kann und wobei diese Transportglieder (12) gelenkig miteinander über Verbindungskörper (14) verbunden sind und die Transportglieder (12) jeweils ein Kunststoffmaterial aufweisen, **dadurch gekennzeichnet, dass** die Transportglieder (12) aus einem Kunststoff hergestellt sind, wobei
- der Kunststoff eine Vielzahl von in seine Materialstruktur eingebetteter kugelartiger Körper aufweist, wobei diese einzelnen Kugelkörper (40) eine Kontaktfläche ausbilden, und die einzelnen Kugelkörper (40) einen Durchmesser von kleiner als 1 mm aufweisen oder
- der Kunststoff zur Veränderung seiner Materialstruktur mit einer Strahlung durchstrahlt wurde und der Kunststoff eine Vielzahl von in seine Materialstruktur eingebetteter kugelartiger Körper aufweist, wobei diese einzelnen Kugelkörper (40) eine Kontaktfläche ausbilden, und die einzelnen Kugelkörper (40) einen Durchmesser von kleiner als 1 mm aufweisen.

10. Transportmittel (2) nach Anspruch 9,
**dadurch gekennzeichnet, dass**
die Transportglieder (12) jeweils einen plattenartigen als Stützfläche für die Behältnisse (10) dienenden Abschnitt (22) aufweisen.

11. Verwendung einer Vorrichtung nach Anspruch 1, für eine Transportkette zum Fördern von Kunststoffbehältnissen (10).

## Claims

1. An apparatus (1) for the conveying of containers (10), with a circulating conveying means (2) which forms a contact face for the containers to be conveyed, wherein this conveying means (2) moves at least locally along a pre-set direction and has a plurality of conveying members (12) connected to one another in an articulated manner, and with a drive device (8) for driving the conveying means (2),
**characterized in that**
the conveying members (12) are produced from a plastics material, wherein
- the plastic material has a plurality of spherical bodies embedded in its material structure, wherein these individual spherical bodies (40) form a contact area, and these individual spherical bodies (40) have a diameter of less than 1 mm, or
- the plastic material has been acted upon with a radiation in order to change its material structure and the plastic material has a plurality of spherical bodies embedded in its material structure, wherein these individual spherical bodies (40) form a contact area, and these individual spherical bodies (40) have a diameter of less than 1 mm.

2. An apparatus (1) according to claim 1,
**characterized in that**
the conveying members (12) are produced from a material which is selected from a group of materials which includes PA, PEEK, POM, UHMW-PE and the like.

3. An apparatus (1) according to claim 1,
**characterized in that**
the apparatus (1) is an apparatus (1) capable of being operated without lubricant.

4. An apparatus (1) according to at least one of the preceding claims, **characterized in that**
the apparatus (1) conveys the containers (10) to a filling plant for filling the containers or away from a filling plant for filling the containers (10).

5. An apparatus (1) according to at least one of the preceding claims, **characterized in that**
the spherical bodies (40) are produced from a material which is selected from a group of materials which includes glass or ceramic spheres.

6. An apparatus (1) according to at least one of the preceding claims, **characterized in that**
the conveying members (12) are connected to one another by means of connecting bodies (14) and these connecting bodies consist of a material which is selected from a group of materials which is more wear-resistant than the conveying members, preferably curable stainless steel or polyamide rods in the case of plastics material chains.

7. An apparatus (1) according to claim 1,
**characterized in that**
the plastics material has a pre-set proportion of gel.

8. An apparatus (1) according to claim 7,
**characterized in that**
the proportion of gel is over 10 %, preferably over 30 % and in a particularly preferred manner over 50 %.

9. A conveying means (2) for the conveying of plastics material containers (10), in particular for an apparatus according to at least one of the preceding claims, wherein the conveying means (2) has a plurality of conveying members (12) connected to one another, wherein the conveying means (2) can be designed in the form of a closed chain and wherein these conveying members (12) are connected to one another in an articulated manner by way of connecting bodies (14) and the conveying members (12) have a plastics material in each case, **characterized in that** the conveying members (12) are produced from a plastic material, wherein
- the plastic material has a plurality of spherical bodies embedded in its material structure, wherein these individual spherical bodies (40) form a contact area, and these individual spherical bodies (40) have a diameter of less than 1 mm or
- the plastics material has been acted upon with radiation in order to alter its material structure and the plastic material has a plurality of spherical bodies embedded in its material structure, wherein these individual spherical bodies (40) form a contact area, and these individual spherical bodies (40) have a diameter of less than 1 mm.

10. A conveying means (2) according to claim 9,
**characterized in that**
the conveying members (12) have in each case a plate-like portion (22) acting as a support face for the containers (10).

11. Use of an apparatus according to claim 1 for a conveying chain for the conveying of plastics material containers (10).

## Revendications

1. Dispositif (1) pour le transport de récipients (10) avec un moyen de transport (2) tournant formant une surface de contact pour les récipients à transporter, dans lequel ledit moyen de transport (2) se déplace au moins en partie dans une direction prédéfinie et comprend une pluralité d'éléments de transport (12) reliés de manière articulée les uns aux autres, et avec un dispositif d'entraînement (8) pour l'entraînement du moyen de transport (2),
**caractérisé en ce que**
les éléments de transport (12) sont réalisés en matière plastique, dans lequel
- la matière plastique présente une pluralité de corps de forme sphérique incorporés à sa structure de matériau, lesdits différents corps sphériques (40) formant une surface de contact, et les différents corps sphériques (40) ayant un diamètre inférieur à 1 mm, ou
- la matière plastique est soumise à un rayonnement pour modifier sa structure de matériau, et la matière plastique comprend une pluralité de corps de forme sphérique incorporés à sa structure de matériau, lesdits différents corps sphériques (40) formant une surface de contact, et les différents corps sphériques (40) ayant un diamètre inférieur à 1 mm.

2. Dispositif (1) selon la revendication 1,
**caractérisé en ce que**
les éléments de transport (12) sont réalisés dans un matériau sélectionné dans un groupe de matériaux comprenant PA, PEEK, POM, UHMW-PE et similaires.

3. Dispositif (1) selon la revendication 1,
**caractérisé en ce que**
le dispositif (1) est un dispositif (1) fonctionnant sans lubrifiant.

4. Dispositif (1) selon au moins une des revendications précédentes, **caractérisé en ce que**
le dispositif (1) transporte les récipients (10) vers une installation de remplissage des récipients ou les évacue d'une installation de remplissage des récipients (10).

5. Dispositif (1) selon au moins une des revendications précédentes, **caractérisé en ce que**
les corps de forme sphérique (40) sont réalisés dans un matériau sélectionné dans un groupe de matériaux comprenant des billes en verre ou en céramique.

6. Dispositif (1) selon au moins une des revendications précédentes, **caractérisé en ce que**
les éléments de transport (12) sont reliés les uns aux autres par des corps de connexion (14) et ces corps de connexion sont dans un matériau sélectionné dans un groupe de matériaux plus résistants à l'usure que les éléments de transport, de préférence de l'acier inoxydable durcissable ou des barres en polyamide en cas de chaînes en matière plastique.

7. Dispositif (1) selon la revendication 1,
**caractérisé en ce que**
le matériau plastique comprend une proportion de gel prédéfinie.

8. Dispositif selon la revendication 7,
**caractérisé en ce que**
la proportion de gel est supérieure à 10 %, de préférence supérieure à 30 %, et de manière particulièrement préférée supérieure à 50 %.

9. Moyen de transport (2) pour le transport de récipients en matière plastique (10), en particulier pour un dispositif selon au moins une des revendications précédentes, dans lequel le moyen de transport (2) comprend une pluralité d'éléments de transport (12) reliés les uns aux autres, ledit moyen de transport (2) pouvant être réalisé sous forme de chaîne fermée, et dans lequel ces éléments de transport (12) étant reliés les uns aux autres de manière articulée par des corps de connexion (14), et les éléments de transport (12) étant chacun en matériau plastique, **caractérisé en ce que** les éléments de transport (12) sont réalisés en matière plastique, dans lequel
- la matière plastique présente une pluralité de corps de forme sphérique incorporés à sa structure de matériau, lesdits différents corps sphériques (40) formant une surface de contact, et les différents corps sphériques (40) ayant un diamètre inférieur à 1 mm, ou
- la matière plastique est soumise à un rayonnement pour modifier sa structure de matériau, et la matière plastique comprend une pluralité de corps de forme sphérique incorporés à sa structure de matériau, lesdits différents corps sphériques (40) formant une surface de contact, et les différents corps sphériques (40) ayant un diamètre inférieur à 1 mm.

10. Moyen de transport (2) selon la revendication 9,
**caractérisé en ce que**
les éléments de transport (12) présentent chacun une partie (22) en forme de plaque servant de surface d'appui pour les récipients (10).

11. Utilisation d'un dispositif selon la revendication 1 pour une chaîne de transport destinée à transporter des récipients en matière plastique (10).
